# EUROPEAN PATENT APPLICATION

(11) **EP 4 629 742 A1**
(43) Date of publication of application: **08.10.2025**
(21) Application number: 23896102.3
(22) Date of filing: 04.08.2023
(51) Int. Cl.: H04W 76/14

(54) **DATA READING METHOD AND RELATED APPARATUS**

(30) Priority: 30.11.2022 CN 202211528054
(71) Applicant: BYD Company Limited, Shenzhen, Guangdong 518118 (CN)
(72) Inventor: JIANG, Feng, Shenzhen, Guangdong 518118 (CN); ZHONG, Yilin, Shenzhen, Guangdong 518118 (CN); ZHANG, Ruihuan, Shenzhen, Guangdong 518118 (CN); FANG, Jinxiang, Shenzhen, Guangdong 518118 (CN); XU, Peitao, Shenzhen, Guangdong 518118 (CN)
(74) Representative: Mathys & Squire
(86) International application number: PCT/CN2023/111132
(87) International publication number: WO 2024/113939

(57) **Abstract**

A data reading method and a related apparatus for reading target data from a vehicle-mounted TBOX to ensure authenticity of read data are provided. The method is applied to the vehicle-mounted TBOX, and a link is established between the vehicle-mounted TBOX and a data reading terminal. Based on the link, the method includes: The vehicle-mounted TBOX receives a connection request from the data reading terminal. The vehicle-mounted TBOX sends a connection response to the connection request to the data reading terminal, to establish a communication connection with the data reading terminal. The data reading terminal sends a data reading instruction to the vehicle-mounted TBOX after the communication connection is established, and the vehicle-mounted TBOX receives the data reading instruction from the data reading terminal. The vehicle-mounted TBOX sends target data to the data reading terminal in response to the data reading instruction, to implement reading of the target data.

## Description

### CROSS-REFERNCE TO RELATED APPLICATION

The present disclosure claims priority to Chinese Patent Application No. 202211528054.6 filed on November 30, 2022 and entitled "DATA READING METHOD AND RELATED APPARATUS", which is incorporated herein by reference in its entirety.

### TECHNICAL FIELD

The present disclosure relates to the field of automotive technologies, and in particular, to a data reading method and a related apparatus.

### BACKGROUND

With the popularization of automobiles, an increasing number of technologies have been applied to vehicles. During driving, vehicles generate large amounts of data, which can reflect working conditions of various modules in the vehicles. Based on this, the data can be used to improve and optimize functions of the modules, and can also be used to identify the cause of a vehicle failure or of an accident.

The above data is synchronized to servers of automobile manufacturers, and hence must be obtained from the servers of the automobile manufacturers when needed.

However, the automobile manufacturers may freely change or delete vehicle data in the servers. As a result, the authenticity of data cannot be ensured when the vehicle data is directly obtained from the servers.

### SUMMARY

The present disclosure provides a data reading method and a related apparatus for reading target data from a vehicle-mounted TBOX to ensure authenticity of read data.

According to a first aspect, the present disclosure provides a data reading method, which is applied to a vehicle-mounted TBOX, and a link is established between the vehicle-mounted TBOX and a data reading terminal. Based on the link, the method includes: The vehicle-mounted TBOX receives a connection request from the data reading terminal, where the connection request is used to request the vehicle-mounted TBOX to establish a communication connection with the data reading terminal. The vehicle-mounted TBOX sends a connection response to the connection request to the data reading terminal, to establish the communication connection with the data reading terminal. The vehicle-mounted TBOX receives a data reading instruction from the data reading terminal after the communication connection is established, where the data reading instruction instructs the vehicle-mounted TBOX to send data. The vehicle-mounted TBOX sends target data to the data reading terminal in response to the data reading instruction, so that the data reading terminal can read data. Compared with an existing method in which data is read from a server, this method can read data directly from the vehicle-mounted TBOX, and can ensure authenticity, integrity and comprehensiveness of read data.

In an implementation, the link is established based on a universal serial bus USB data line or based on a wireless local area network.

A data transmission rate can be greatly increased and data reading time can be shortened by using the link established based on the universal serial bus USB data line for data transmission. Convenience of data reading can be boosted by using the link established based on the wireless local area network for data transmission.

In an implementation, the data reading instruction carries an instruction identity; the instruction identity instructs the vehicle-mounted TBOX to send data in a file list stored in the vehicle-mounted TBOX; and the target data includes the data in the file list.

In an implementation, the data reading instruction carries an instruction identity; the instruction identity instructs the vehicle-mounted TBOX to send data in a file stored in the vehicle-mounted TBOX; and the target data includes the data in the file stored in the vehicle-mounted TBOX.

In an implementation, the data reading instruction further carries a selected data identity, and the selected data identity instructs the vehicle-mounted TBOX to send data in a selected file; and the target data includes the data in the selected file.

In an implementation, after the communication connection is established and before the vehicle-mounted TBOX receives the data reading instruction from the data reading terminal, the method further includes: The vehicle-mounted TBOX obtains a security authentication result, where the security authentication result indicates that the vehicle-mounted TBOX has performed successful security authentication on the data reading terminal. The vehicle-mounted TBOX sends the security authentication result to the data reading terminal, so that the data reading terminal performs data reading after the successful security authentication. This prevents data in the vehicle-mounted TBOX from being stolen by a malicious device, and ensures the security of the data in the vehicle-mounted TBOX.

In an implementation, that the vehicle-mounted TBOX obtains the security authentication result includes: The vehicle-mounted TBOX sends a security authentication message to the data reading terminal, where the security authentication message carries first ciphertext data, and the first ciphertext data is obtained by encrypting plaintext data. The vehicle-mounted TBOX receives a security authentication verification message from the data reading terminal, where the security authentication verification message carries a decryption result of the first ciphertext data. The vehicle-mounted TBOX obtains the security authentication result based on the plaintext data and the decryption result of the first ciphertext data.

In an implementation, the first ciphertext data is obtained by encrypting the plaintext data based on a private key; and the security authentication message further carries an identifier, where the identifier indicates a public key paired with the private key, and the public key is used to decrypt the first ciphertext data to obtain the decryption result of the first ciphertext data.

In an implementation, before the vehicle-mounted TBOX obtains the security authentication result, the method further includes: The vehicle-mounted TBOX receives a security authentication request from the data reading terminal, where the security authentication request instructs the vehicle-mounted TBOX to obtain the security authentication result. That the vehicle-mounted TBOX obtains the security authentication result includes: The vehicle-mounted TBOX obtains the security authentication result in response to the security authentication request.

A data reading process is usually initiated by the data reading terminal. Therefore, before data reading, the vehicle-mounted TBOX is instructed through the security authentication request to obtain the security authentication result, so that the vehicle-mounted TBOX performs security authentication on the data reading terminal when the data reading terminal needs to read data. This prevents the vehicle-mounted TBOX from performing a redundant security authentication operation when the data reading terminal does not need to read data.

According to a second aspect, the present disclosure provides a data reading method, which is applied to a data reading terminal, and a link is established between the data reading terminal and a vehicle-mounted TBOX. Based on the link, the method includes: The data reading terminal sends a connection request to the vehicle-mounted TBOX in response to an instruction to establish a connection, where the connection request is used to request the vehicle-mounted TBOX to establish a communication connection with the data reading terminal. The data reading terminal receives a connection response to the connection request from the vehicle-mounted TBOX, to establish the communication connection with the data reading terminal. The data reading terminal sends a data reading instruction to the vehicle-mounted TBOX after the communication connection is established, where the data reading instruction instructs the vehicle-mounted TBOX to send data. The data reading terminal receives target data from the vehicle-mounted TBOX, so that the data reading terminal can read data. Compared with an existing method in which data is read from a server, this method can read data directly from the vehicle-mounted TBOX, and can ensure authenticity, integrity and comprehensiveness of read data.

In an implementation, the link is established based on a universal serial bus USB data line or based on a wireless local area network.

A data transmission rate can be greatly increased and time of data reading can be shortened by using the link established based on the universal serial bus USB data line for data transmission. Convenience of data reading can be boosted by using the link established based on the wireless local area network for data transmission.

In an implementation, the data reading instruction carries an instruction identity; the instruction identity instructs the vehicle-mounted TBOX to send data in a file list stored in the vehicle-mounted TBOX; and the target data includes the data in the file list.

In an implementation, the data reading instruction carries an instruction identity; the instruction identity instructs the vehicle-mounted TBOX to send data in a file stored in the vehicle-mounted TBOX; and the target data includes the data in the file stored in the vehicle-mounted TBOX.

In an implementation, the data reading instruction further carries a selected data identity, and the selected data identity instructs the vehicle-mounted TBOX to send data in a selected file; and the target data includes the data in the selected file.

In an implementation, after the communication connection is established, the method further includes:

The data reading terminal receives a security authentication result from the vehicle-mounted TBOX, where the security authentication result indicates that the vehicle-mounted TBOX has performed successful security authentication on the data reading terminal. That the data reading terminal sends the data reading instruction to the vehicle-mounted TBOX includes: The data reading terminal sends the data reading instruction to the vehicle-mounted TBOX based on the security authentication result.

After receiving the security authentication result indicating the successful security authentication, the data reading terminal sends the data reading instruction to the vehicle-mounted TBOX for data reading. This prevents data in the vehicle-mounted TBOX from being stolen by a malicious device, and ensures the security of the data in the vehicle-mounted TBOX.

In an implementation, after the communication connection is established and before the data reading terminal receives the security authentication result from the vehicle-mounted TBOX, the method further includes: The data reading terminal receives a security authentication message from the vehicle-mounted TBOX, where the security authentication message carries first ciphertext data. The data reading terminal obtains a decryption result of the first ciphertext data. The data reading terminal sends a security authentication verification message to the vehicle-mounted TBOX, where the security authentication verification message carries the decryption result of the first ciphertext data, and the decryption result of the first ciphertext data is used to determine the security authentication result.

In an implementation, the first ciphertext data is obtained by encrypting the plaintext data based on a private key; and the security authentication message further carries an identifier, where the identifier indicates a public key paired with the private key, and the public key is used to decrypt the first ciphertext data to obtain the decryption result of the first ciphertext data.

In an implementation, before the data reading terminal receives the successful security authentication result from the vehicle-mounted TBOX, the method further includes: The data reading terminal sends a security authentication request to the vehicle-mounted TBOX, where the security authentication request instructs the vehicle-mounted TBOX to obtain the security authentication result.

A data reading process is usually initiated by the data reading terminal. Therefore, before data reading, the vehicle-mounted TBOX is instructed through the security authentication request to obtain the security authentication result, so that the vehicle-mounted TBOX performs security authentication on the data reading terminal when the data reading terminal needs to read data. This prevents the vehicle-mounted TBOX from performing a redundant security authentication operation when the data reading terminal does not need to read data.

In an implementation, an account logged in to the data reading terminal is a first account. Before the data reading terminal sends the connection request to the vehicle-mounted TBOX in response to the instruction to establish the connection, the method further includes: The data reading terminal determines that the first account has a data reading permission. That the data reading terminal sends the connection request to the vehicle-mounted TBOX in response to the instruction to establish the connection includes: The data reading terminal sends, based on a fact that the first account has the data reading permission, the connection request to the vehicle-mounted TBOX in response to the instruction to establish the connection.

When it is determined that the first account has the data reading permission, the data reading terminal sends the connection request to the vehicle-mounted TBOX. This prevents a device without the data reading permission from establishing a connection with the vehicle-mounted TBOX and stealing data.

In an implementation, after the data reading terminal receives the target data from the vehicle-mounted TBOX, the method further includes: The data reading terminal encapsulates the target data into a file in a custom format.

The custom format can be understood as another format that is different from a known format specified by the communication protocol. The data reading terminal encapsulates the target data into the file in the custom format, making it difficult for another device to parse the file in the custom format to obtain the target data without knowing the custom format, thereby ensuring security of the target data.

**In** an implementation, the data reading terminal parses the file in the custom format in response to an input data parsing instruction to obtain the target data.

**In** an implementation, the data reading terminal includes an internal memory and an external memory, and the file in the custom format is stored in the external memory. The data parsing instruction includes a file import instruction, and the file import instruction instructs the data reading terminal to import the file in the custom format in the external memory into the internal memory, so that the data reading terminal parses the file in the custom format in the internal memory.

Because the file import instruction is used to import the file in the custom format in the external memory into the internal memory, the file in the custom format in the internal memory can be parsed directly in response to the file import instruction without the need for additional instructions to instruct the data reading terminal to parse the file in the custom format in the internal memory. This reduces a quantity of instructions and makes a parsing process faster.

**In** an implementation, before the data reading terminal parses the file in the custom format to obtain the target data, the method includes: The data reading terminal imports the file in the custom format in the external memory into the internal memory in response to the file import instruction, so that the data reading terminal parses the file in the custom format in the internal memory.

**In** an implementation, an account logged in to the data reading terminal is a second account. That the data reading terminal parses the file in the custom format in response to the data parsing instruction to obtain the target data includes: When the second account has a file parsing permission, the data reading terminal parses the file in the custom format in response to the data parsing instruction to obtain the target data.

When it is determined that the second account has the file parsing permission, the data reading terminal parses the file in the custom format to obtain the target data. This prevents another account that has no file parsing permission from obtaining the target data through parsing and ensures data security.

**In** an implementation, an account logged in to the data reading terminal is a second account. The file in the custom format includes a file header and a file body. The file header includes a file permission value, and the file permission value is used to determine an account having a file parsing permission. The file body includes the target data. That the data reading terminal parses the file in the custom format in response to the input data parsing instruction to obtain the target data includes: The data reading terminal parses the file header in response to the input data parsing instruction to obtain the file permission value. The data reading terminal determines, based on the file permission value obtained through parsing, that the second account has the file parsing permission. Based on a fact that the second account has the file parsing permission, the data reading terminal parses the file body to obtain the target data.

The data reading terminal parses the file header to obtain the file permission value, and determines that the second account has the file parsing permission based on the file permission value obtained through parsing. In this way, the file parsing permission of the second account is verified based on the file permission value in the file header, so that when the second account has the file parsing permission, the data reading terminal parses the file body to obtain the target data, thereby ensuring security of the target data.

In an implementation, the file header further includes a signature value of the file in the custom format. During an encapsulation process of the file in the custom format, the signature value of the file in the custom format is obtained based on the file permission value. That the data reading terminal parses the file header in response to the input data parsing instruction to obtain the file permission value includes: The data reading terminal parses the file header in response to the input data parsing instruction to obtain the file permission value and the signature value of the file in the custom format. The method further includes: The data reading terminal calculates a reference value of the signature value of the file in the custom format based on the file permission value obtained through parsing. That based on a fact that the second account has the file parsing permission, the data reading terminal parses the file body to obtain the target data includes: Based on facts that the second account has the file parsing permission and the reference value of the signature value of the file in the custom format is consistent with the signature value of the file in the custom format, the data reading terminal parses the file body to obtain the target data.

The file header further includes the signature value of the file in the custom format. During the encapsulation process of the file in the custom format, the signature value of the file in the custom format is obtained based on the file permission value. Based on this, the reference value of the signature value of the file in the custom format is calculated based on the file permission value that is of the file in the custom format and that is obtained through parsing. When the reference value of the signature value of the file in the custom format is consistent with the signature value of the file in the custom format, the file body is parsed to obtain the target data. However, when the reference value of the signature value of the file in the custom format is inconsistent with the signature value of the file in the custom format, the file body is not parsed. This effectively avoids maliciously tampering with the file permission value to cause an account originally having no file parsing permission to have the file parsing permission, thereby ensuring security of the target data.

In an implementation, the file permission value includes identity values of N accounts, and indicates that the N accounts have file parsing permissions, where N is a positive integer. That the data reading terminal determines, based on the file permission value obtained through parsing, that the second account has the file parsing permission includes: The data reading terminal determines an identity value of the second account. The data reading terminal determines, based on the identity values of the N accounts including the identity value of the second account, that the second account has the file parsing permission. A method for determining the identity value of the second account is the same as a method for determining the identity values of the N accounts, where N can be 1, or can be 2 or an integer greater than 2. When N is 1, the N accounts can be the second account that reads the target data from a TBOX.

The identity values of the N accounts are added to the file permission value, so that the file permission value can indicate that the N accounts have the file parsing permissions. In this way, it can be determined that the second account has the file parsing permission by identifying the identity value of the second account included in the file permission value.

In an implementation, the identity value of each of the N accounts is obtained based on the account and a password of the account. That the data reading terminal determines the identity value of the second account includes: The data reading terminal determines the identity value of the second account based on the second account and a password of the second account.

An identity value of an account is obtained based on the account and a password of the account, rather than the account itself or another simple numerical value. This increases the difficulty of cracking the identity value and the difficulty of changing the identity value to cause an account originally having no file parsing permission to have the file parsing permission, thereby ensuring security of the target data.

In an implementation, the file in the custom format includes a file header and a file body. The file header includes data validity information, and the data validity information indicates validity time of the target data. The file body includes the target data. That the data reading terminal obtains the target data parsed from the file in the custom format in response to the input data parsing instruction includes: The data reading terminal parses the file header in response to the input data parsing instruction to obtain the data validity information. When the data validity information indicates that the target data is valid at a current moment, the data reading terminal parses the file body to obtain the target data.

The data validity information indicates the validity time of the target data, so that the target data can be parsed only when it is valid at the current moment, and cannot be parsed when it is invalid at the current moment. This prevents the target data from being parsed by others for a long time or even permanently.

In an implementation, the file header further includes a signature value of the file in the custom format. During an encapsulation process of the file in the custom format, the signature value of the file in the custom format is obtained based on the data validity information. That the data reading terminal parses the file header in response to the input data parsing instruction to obtain the data validity information includes: The data reading terminal parses the file header in response to the input data parsing instruction to obtain the data validity information and the signature value of the file in the custom format. The method further includes: The data reading terminal calculates a reference value of the signature value of the file in the custom format based on the data validity information obtained through parsing. That the data reading terminal parses the file body to obtain the target data when the data validity information indicates that the target data is valid at the current moment includes: The data reading terminal parses the file body to obtain the target data when the data validity information indicates that the target data is valid at the current moment and the reference value of the signature value of the file in the custom format is consistent with the signature value of the file in the custom format.

The file header further includes the signature value of the file in the custom format. During the encapsulation process of the file in the custom format, the signature value of the file in the custom format is obtained based on the data validity information. Based on this, the reference value of the signature value of the file in the custom format is calculated based on the data validity information obtained through parsing. When the reference value of the signature value of the file in the custom format is consistent with the signature value of the file in the custom format, the file body is parsed to obtain the target data. However, when the reference value of the signature value of the file in the custom format is inconsistent with the signature value of the file in the custom format, the file body is not parsed. This effectively avoids maliciously tampering with the data validity information to cause the target data that should be invalid to become valid, thereby ensuring validity of the target data.

In an implementation, the file in the custom format includes a file header and a file body. The file header includes a file permission value, data validity information, and a signature value of the file in the custom format. The data validity information indicates validity time of the target data, and the file permission value is used to determine an account having a file parsing permission. The file body includes the target data. During the encapsulation process of the file in the custom format, the signature value of the file in the custom format is obtained based on the file permission value and the data validity information.

That the data reading terminal parses the file in the custom format in response to the input data parsing instruction to obtain target data includes: The data reading terminal parses the file header in response to the data parsing instruction to obtain the file permission value, the data validity information, and the signature value of the file in the custom format. The data reading terminal determines, based on the file permission value obtained through parsing, that the second account has the file parsing permission. The data reading terminal calculates a reference value of the signature value of the file in the custom format based on the file permission value and the data validity information obtained through parsing. Based on facts that the second account has the file parsing permission, the data validity information indicates that the target data is valid at the current moment, and the reference value of the signature value of the file in the custom format is consistent with the signature value of the file in the custom format, the data reading terminal parses the file body to obtain the target data.

During the encapsulation process of the file in the custom format, the signature value of the file in the custom format is obtained based on both the file permission value and the data validity information. Therefore, when the reference value of the signature value of the file in the custom format is consistent with the signature value of the file in the custom format, the file body is parsed to obtain the target data. However, when the reference value of the signature value of the file in the custom format is inconsistent with the signature value of the file in the custom format, the file body is not parsed. This can avoid maliciously tampering with the file permission value to cause an account originally having no file parsing permission to have the file parsing permission, and can avoid maliciously tampering with the data validity information to cause the target data that should be invalid to become valid, thereby ensuring validity of the target data.

In an implementation, the data reading terminal sends the file in the custom format to a server in response to an input upload instruction, so that the server obtains the target data by parsing the file in the custom format. The data reading terminal receives the target data from the server.

The data reading terminal sends the upload instruction to the server, so that the server parses the file in the custom format to obtain the target data, thereby reducing load of the data reading terminal.

According to a third aspect, the present disclosure provides a data reading apparatus, which is used in a vehicle-mounted TBOX, and a link is established between the vehicle-mounted TBOX and a data reading terminal. The apparatus includes: a receiving part, configured to receive a connection request from the data reading terminal, where the connection request is used to request the vehicle-mounted TBOX to establish a communication connection with the data reading terminal; and a sending part, configured to send a connection response to the connection request to the data reading terminal, to establish the communication connection with the data reading terminal. The receiving part is configured to receive a data reading instruction from the data reading terminal after the communication connection is established, where the data reading instruction instructs the vehicle-mounted TBOX to send data. The sending part is configured to send target data to the data reading terminal in response to the data reading instruction.

In an implementation, the link is established based on a universal serial bus USB data line or based on a wireless local area network.

In an implementation, the data reading instruction carries an instruction identity; the instruction identity instructs the vehicle-mounted TBOX to send data in a file list stored in the vehicle-mounted TBOX; and the target data includes the data in the file list.

In an implementation, the data reading instruction carries an instruction identity; the instruction identity instructs the vehicle-mounted TBOX to send data in a file stored in the vehicle-mounted TBOX; and the target data includes the data in the file stored in the vehicle-mounted TBOX.

In an implementation, the data reading instruction further carries a selected data identity, and the selected data identity instructs the vehicle-mounted TBOX to send data in a selected file; and the target data includes the data in the selected file.

In an implementation, the apparatus further includes: a processing unit, configured to obtain a security authentication result, where the security authentication result indicates that the vehicle-mounted TBOX has performed successful security authentication on the data reading terminal; and a sending part, further configured to send the security authentication result to the data reading terminal.

In an implementation, the sending part is further configured to send a security authentication message to the data reading terminal, where the security authentication message carries first ciphertext data, and the first ciphertext data is obtained by encrypting plaintext data. The receiving part is further configured to receive a security authentication verification message from the data reading terminal, where the security authentication verification message carries a decryption result of the first ciphertext data. The processing unit is configured to obtain the security authentication result based on the plaintext data and the decryption result of the first ciphertext data.

In an implementation, the first ciphertext data is obtained by encrypting the plaintext data based on a private key; and the security authentication message further carries an identifier, where the identifier indicates a public key paired with the private key, and the public key is used to decrypt the first ciphertext data to obtain the decryption result of the first ciphertext data.

In an implementation, the receiving part is further configured to receive a security authentication request from the data reading terminal, where the security authentication request instructs the vehicle-mounted TBOX to obtain the security authentication result. The processing unit is configured to obtain the security authentication result by the vehicle-mounted TBOX in response to the security authentication request.

For specific implementations, related descriptions, and technical effects of the foregoing units, refer to related descriptions in the first aspect.

According to a fourth aspect, the present disclosure provides a data reading apparatus, which is used in a data reading terminal, and a link is established between the data reading terminal and a vehicle-mounted TBOX. The apparatus includes: a sending part, configured to send a connection request to the vehicle-mounted TBOX in response to an instruction to establish a connection, where the connection request is used to request the vehicle-mounted TBOX to establish a communication connection with the data reading terminal; and a receiving part, configured to receive a connection response to the connection request from the vehicle-mounted TBOX, to establish the communication connection with the data reading terminal. The sending part is configured to send a data reading instruction to the vehicle-mounted TBOX after the communication connection is established, where the data reading instruction instructs the vehicle-mounted TBOX to send data. The receiving part is configured to receive target data from the vehicle-mounted TBOX.

In an implementation, the link is established based on a universal serial bus USB data line or based on a wireless local area network.

In an implementation, the data reading instruction carries an instruction identity; the instruction identity instructs the vehicle-mounted TBOX to send data in a file list stored in the vehicle-mounted TBOX; and the target data includes the data in the file list.

In an implementation, the data reading instruction carries an instruction identity; the instruction identity instructs the vehicle-mounted TBOX to send data in a file stored in the vehicle-mounted TBOX; and the target data includes the data in the file stored in the vehicle-mounted TBOX.

In an implementation, the data reading instruction further carries a selected data identity, and the selected data identity instructs the vehicle-mounted TBOX to send data in a selected file; and the target data includes the data in the selected file.

In an implementation, the receiving part is further configured to receive a security authentication result from the vehicle-mounted TBOX, where the security authentication result indicates that the vehicle-mounted TBOX has performed successful security authentication on the data reading terminal. The sending part is further configured to send the data reading instruction by the data reading terminal to the vehicle-mounted TBOX based on the security authentication result.

In an implementation, the receiving part is further configured to receive a security authentication message from the vehicle-mounted TBOX, where the security authentication message carries first ciphertext data. The processing unit is configured to obtain a decryption result of the first ciphertext data. The sending part is further configured to send a security authentication verification message to the vehicle-mounted TBOX, where the security authentication verification message carries the decryption result of the first ciphertext data, and the decryption result of the first ciphertext data is used to determine the security authentication result.

In an implementation, the first ciphertext data is obtained by encrypting the plaintext data based on a private key; and the security authentication message further carries an identifier, where the identifier indicates a public key paired with the private key, and the public key is used to decrypt the first ciphertext data to obtain the decryption result of the first ciphertext data.

In an implementation, the sending part is further configured to send a security authentication request to the vehicle-mounted TBOX, where the security authentication request instructs the vehicle-mounted TBOX to obtain the security authentication result.

In an implementation, an account logged in to the data reading terminal is a first account. The processing unit is further configured to determine that the first account has a data reading permission. The sending part is configured to send, based on a fact that the first account has the data reading permission, the connection request to the vehicle-mounted TBOX in response to the instruction to establish the connection.

In an implementation, the apparatus further includes a processing unit, configured to encapsulate the target data into a file in a custom format.

In an implementation, the apparatus further includes a processing unit, configured to parse the file in the custom format in response to an input data parsing instruction to obtain the target data.

In an implementation, the data reading terminal includes an internal memory and an external memory, and the file in the custom format is stored in the external memory. The data parsing instruction includes a file import instruction, and the file import instruction is used to import the file in the custom format in the external memory into the internal memory, to parse the file in the custom format in the internal memory.

In an implementation, an account logged in to the data reading terminal is a first account. The file in the custom format includes a file header and a file body. The file header includes a file permission value, and the file permission value is used to determine an account having a file parsing permission. The file body includes the target data. The processing unit is configured to: parse the file header in response to the input data parsing instruction to obtain the file permission value; determine, based on the file permission value obtained through parsing, that the first account has the file parsing permission; and based on a fact that the first account has the file parsing permission, parse the file body to obtain the target data.

In an implementation, the file header further includes a signature value of the file in the custom format. During an encapsulation process of the file in the custom format, the signature value of the file in the custom format is obtained based on the file permission value. The processing unit is configured to: parse the file header in response to the input data parsing instruction to obtain the file permission value and the signature value of the file in the custom format; calculate a reference value of the signature value of the file in the custom format based on the file permission value obtained through parsing; and based on facts that the first account has the file parsing permission and the reference value of the signature value of the file in the custom format is consistent with the signature value of the file in the custom format, parse the file body to obtain the target data.

In an implementation, the file permission value includes identity values of N accounts, and indicates that the N accounts have file parsing permissions, where N is a positive integer. The processing unit is configured to: determine an identity value of the first account; and determine, based on the identity values of the N accounts including the identity value of the first account, that the first account has the file parsing permission.

In an implementation, the identity value of each of the N accounts is obtained based on the account and a password of the account. The processing unit is configured to determine the identity value of the first account based on the first account and a password of the first account.

In an implementation, the file in the custom format includes a file header and a file body. The file header includes data validity information, and the data validity information indicates validity time of the target data. The file body includes the target data. The processing unit is configured to: parse the file header in response to the input data parsing instruction to obtain the data validity information; and when the data validity information indicates that the target data is valid at a current moment, parse the file body to obtain the target data.

In an implementation, the file header further includes a signature value of the file in the custom format. During an encapsulation process of the file in the custom format, the signature value of the file in the custom format is obtained based on the data validity information. The processing unit is configured to: parse the file header in response to the input data parsing instruction to obtain the data validity information and the signature value of the file in the custom format; calculate a reference value of the signature value of the file in the custom format based on the data validity information obtained through parsing; and parse the file body to obtain the target data when the data validity information indicates that the target data is valid at the current moment and the reference value of the signature value of the file in the custom format is consistent with the signature value of the file in the custom format.

In an implementation, the sending part is configured to send the file in the custom format to a server in response to an input upload instruction, so that the server obtains the target data by parsing the file in the custom format. The receiving part is configured to receive the target data from the server.

For specific implementations, related descriptions, and technical effects of the foregoing units, refer to related descriptions in the second aspect.

A fifth aspect of embodiments of the present disclosure provides a vehicle-mounted TBOX, including one or more processors and a memory. The memory stores computer-readable instructions, and the one or more processors read the computer-readable instructions to enable the vehicle-mounted TBOX to implement the method according to any implementation of the first aspect.

A sixth aspect of embodiments of the present disclosure provides a terminal device, including one or more processors and a memory. The memory stores computer-readable instructions, and the one or more processors read the computer-readable instructions to enable the terminal device to implement the method according to any implementation of the second aspect.

A seventh aspect of embodiments of the present disclosure provides a computer-readable storage medium, including computer-readable instructions. When the computer-readable instructions are run on a computer, the computer is enabled to perform the method according to any implementation of the first aspect, or the method according to any implementation of the second aspect.

An eighth aspect of embodiments of the present disclosure provides a chip, including one or more processors. Some or all of the processors are configured to read and execute a computer program stored in a memory, to perform the method according to any one of the possible implementations of the first aspect or the second aspect.

Optionally, the chip includes the memory, and the memory and the processor are connected to each other through a circuit or a wire. Further, optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of the present disclosure may be implemented by one chip or by a plurality of chips through collaboration.

A ninth aspect of embodiments of the present disclosure provides a computer program product, and the computer program product includes computer software instructions. The computer software instructions may be loaded by a processor to implement the method according to any one of the implementations of the first aspect or the second aspect.

### BRIEF DESCRIPTION OF DRAWINGS

FIG. 1 is a diagram of an architecture of a bus system in a vehicle;
FIG. 2 is a diagram of an architecture of a data reading system;
FIG. 3 is a diagram of an embodiment of a data reading method provided in the present disclosure;
FIG. 4(a) is a first diagram of an operation interface of a data reading terminal;
FIG. 4(b) is a second diagram of an operation interface of a data reading terminal;
FIG. 4(c) is a third diagram of an operation interface of a data reading terminal;
FIG. 5 is a diagram of a structure of a target file in an embodiment of the present disclosure;
FIG. 6 is a schematic flowchart for parsing target data in an embodiment of the present disclosure;
FIG. 7 is a schematic flowchart of a process of security authentication in an embodiment of the present disclosure;
FIG. 8 is a diagram of an embodiment of a data reading apparatus provided in the present disclosure;
FIG. 9 is a diagram of a structure of a vehicle-mounted TBOX provided in an embodiment of the present disclosure; and
FIG. 10 is a diagram of a structure of a terminal device provided in an embodiment of the present disclosure.

### DESCRIPTION OF EMBODIMENTS

The following clearly and completely describes the technical solutions in embodiments of the present disclosure with reference to the accompanying drawings in embodiments of the present disclosure. It is clear that the described embodiments are merely some but not all of embodiments of the present disclosure. All other embodiments obtained by a person skilled in the art based on embodiments of the present disclosure without creative efforts shall fall within the protection scope of the present disclosure.

In the specification, claims, and accompanying drawings of the present disclosure, the terms "first", "second", and corresponding terminology numbers are intended to distinguish between similar objects but do not necessarily indicate a specific order or sequence. It should be understood that the terms used in such a way are interchangeable in proper circumstances, and this is merely a discrimination manner for describing objects having a same attribute in embodiments of the present disclosure. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In descriptions of the present disclosure, "/" means "or" unless otherwise specified. For example, A/B may represent A or B. In the present disclosure, "and/or" describes only an association relationship between associated objects and represents that three relationships may exist. For example, A and/or B may represent the following three cases: Only A exists, both A and B exist, and only B exists. In addition, in the descriptions of the present disclosure, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

A vehicle-mounted TBOX is a box-shaped electronic control unit (electronic control unit, ECU) installed inside a vehicle body. The vehicle-mounted TBOX can collect electronic status information of another ECU unit in a vehicle body network, and can provide data channels for 3GPP/LTE-based Telecommunications, Mobile, Unicom data internet access services to an in-vehicle infotainment.

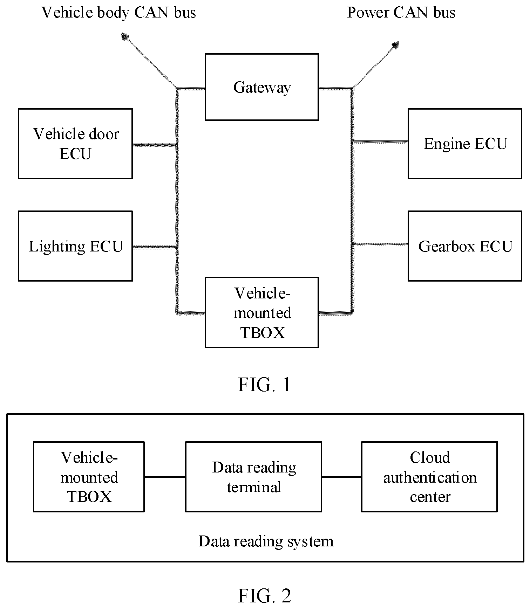

For ease of understanding, the following describes the vehicle-mounted TBOX with reference to FIG. 1.

FIG. 1 is a diagram of an architecture of a bus system in a vehicle. The bus system includes the vehicle-mounted TBOX, a vehicle body CAN bus, a power CAN bus, a gateway, a vehicle door electronic control unit (Electronic Control Unit, ECU), a lighting ECU, an engine ECU and a gearbox ECU.

The vehicle body CAN bus and the power CAN bus are connected through the gateway, the vehicle door ECU and the lighting ECU are both connected to the vehicle body CAN bus, and the engine ECU and the gearbox ECU are both connected to the power CAN bus.

The vehicle-mounted TBOX is connected to the vehicle body CAN bus and can collect and store data from the vehicle door ECU and the lighting ECU. The vehicle-mounted TBOX is further connected to the power CAN bus and can collect and store data from the engine ECU and the gearbox ECU.

It will be understood that a large amount of vehicle data is stored in the vehicle-mounted TBOX, and these vehicle data can reflect working conditions of various modules in the vehicle. Therefore, the vehicle data can be read from the vehicle-mounted TBOX and analyzed, and then the functions of the modules can be improved and optimized based on an analysis result, or the cause of a vehicle failure or an accident can be identified.

In embodiments of the present disclosure, the vehicle data may include data of any module in the vehicle, for example, may include key data such as a vehicle brake pedal, an accelerator pedal, a vehicle speed, and the like.

Because the vehicle-mounted TBOX synchronizes the vehicle data to servers of automobile manufacturers, when the vehicle data is needed, an existing method is to obtain the vehicle data from the servers. However, for the servers of the automobile manufacturers, the automobile manufacturers may freely change or delete vehicle data in the servers. As a result, authenticity of the vehicle data cannot be ensured when the vehicle data is read from the servers.

In addition, when a communication module in the vehicle-mounted TBOX is damaged, the vehicle data cannot be synchronized to the servers. Moreover, during an actual data synchronization process, given limited bandwidth resources, the vehicle-mounted TBOX may not synchronize all the vehicle data to the servers. Therefore, if the vehicle data is read from the servers, the read vehicle data may be incomplete and insufficient.

To resolve the foregoing problem, an embodiment of the present disclosure provides a data reading system. As shown in FIG. 2, the data reading system includes a vehicle-mounted TBOX, a data reading terminal, and a cloud authentication center. A physical connection is established between the vehicle-mounted TBOX and the data reading terminal, and a physical connection is established between the data reading terminal and the cloud authentication center.

There are two ways for establishing the physical connection between the vehicle-mounted TBOX and the data reading terminal. The first way is that the physical connection between the vehicle-mounted TBOX and the data reading terminal is established through a universal serial bus (Universal Serial Bus, USB). The second way is that the physical connection between the vehicle-mounted TBOX and the data reading terminal is established through a wireless local area network.

There are two ways for establishing the physical connection between the data reading terminal and the cloud authentication center. The first way is that the physical connection between the data reading terminal and the cloud authentication center is established through a network cable. The second way is that the physical connection between the data reading terminal and the cloud authentication center is established through a wireless network.

In the system, the vehicle-mounted TBOX is configured not only to collect data, process data, encrypt data, and store data, but also to cooperate with the data reading terminal to perform data reading.

Specifically, the vehicle-mounted TBOX may collect data from an ECU based on a signal defined in a standardized data communication protocol when a collection condition is met. Because the collected data is transmitted in a form of data frames, after collecting the data, the vehicle-mounted TBOX combines the data frames according to the standardized data communication protocol to obtain complete data. The vehicle-mounted TBOX then encrypts the complete data and stores the encrypted data in a local memory. Finally, the vehicle-mounted TBOX cooperates with the data reading terminal to complete data reading.

The data reading terminal may be a terminal device such as a mobile phone, a tablet computer, a laptop computer, a personal computer, or the like, which is used to read the data in the vehicle-mounted TBOX, analyze the read data, and visualize the analyzed data.

The cloud authentication center is a cloud server configured for login authentication of an account on the data reading terminal, decryption of data from the data reading terminal, and uploading and parsing of a file (encapsulated from the vehicle data).

Based on the data reading system shown in FIG. 2, an embodiment of the present disclosure provides a data reading method. In the method, a data reading terminal directly establishes a communication connection with a vehicle-mounted TBOX, and sends a data reading instruction to the vehicle-mounted TBOX based on the communication connection. The vehicle-mounted TBOX sends data to the data reading terminal in response to the data reading instruction, so that the data reading terminal can read data. Therefore, compared with an existing method in which data is read from a server, this method can read data directly from the vehicle-mounted TBOX, and can ensure authenticity, integrity and comprehensiveness of read data.

The following describes the data reading method provided in this embodiment of the present disclosure.

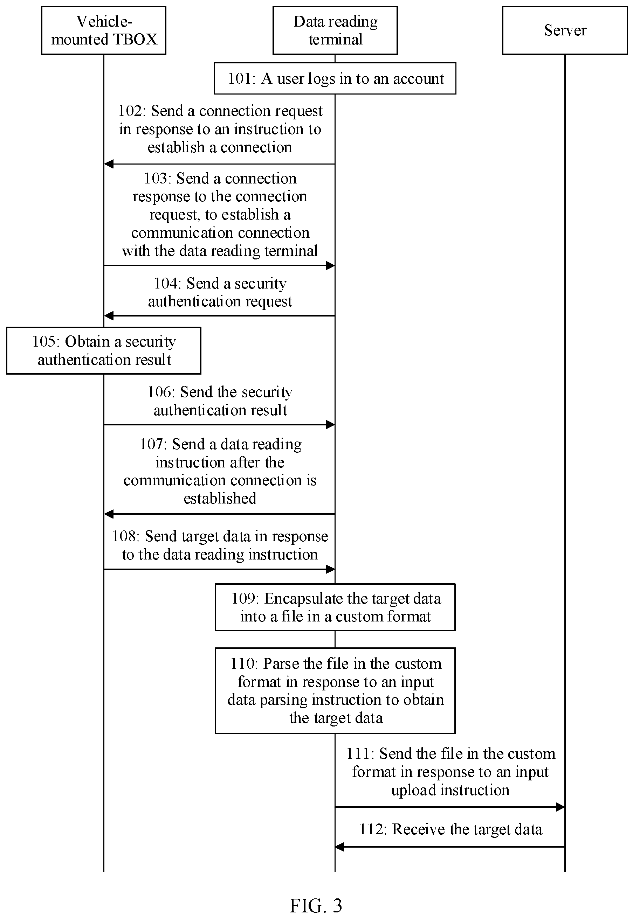

As shown in FIG. 3, an embodiment of the present disclosure provides a data reading method, which can be applied to the data reading system shown in FIG. 2. In the method, a link is established between the vehicle-mounted TBOX and the data reading terminal, and the link means a passive point-to-point physical connection.

Based on the above descriptions, it can be learned that there are two ways for establishing the physical connection between the vehicle-mounted TBOX and the data reading terminal. Correspondingly, there can be two types of links.

For example, if the physical connection between the vehicle-mounted TBOX and the data reading terminal is established through a USB, the link is established based on a universal serial bus USB data line. If the physical connection between the vehicle-mounted TBOX and the data reading terminal is established through a wireless local area network, the link is established based on the wireless local area network.

In addition, the link in embodiments of the present disclosure may alternatively be established based on a Bluetooth communication method.

Based on the above link, the method provided in this embodiment of the present disclosure includes the following steps.

Step 101: A user logs in to an account on the data reading terminal.

Specifically, the user may input the account and a password of the account through a graphical user interface (Graphical User Interface, GUI) provided by the data reading terminal, and then click to log in. Upon successful login, the data reading terminal may determine a permission of the current account and then grant a corresponding functional permission.

The functional permission may include various permissions such as a data reading permission, a data display permission, and a data statistics permission.

The data reading permission is used as an example. An account logged in to the data reading terminal is a first account, and correspondingly, the data reading terminal determines that the first account has the data reading permission. Based on a fact that the first account has the data reading permission, the data reading terminal continues to execute step 102.

The data reading terminal may perform permission authentication on the current account based on the current account and the password of the current account to determine the permission of the current account. The data reading terminal may alternatively send the current account and the password of the current account to the cloud authentication center for permission authentication, and then determine the permission of the current account based on a result returned from the cloud authentication center.

It should be noted that the data reading terminal may be used by logging in with an account or not. Therefore, step 101 is optional, and an operation of determining whether the first account has the data reading permission is also optional.

Step 102: The data reading terminal sends a connection request to the vehicle-mounted TBOX in response to an instruction to establish a connection, where the connection request is used to request the vehicle-mounted TBOX to establish a communication connection with the data reading terminal.

The instruction to establish the connection is input by the user on the data reading terminal. For example, the instruction to establish the connection may be an operation instruction of the user clicking a virtual button "Connect" on the data reading terminal.

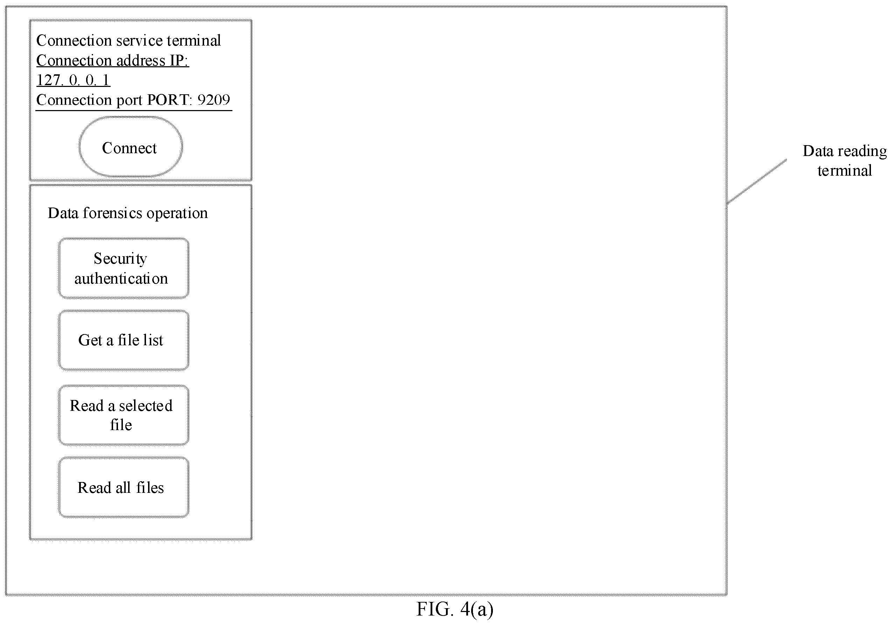

Specifically, as shown in FIG. 4(a), which is a first diagram of an operation interface of the data reading terminal. The user may click the "Connect" button in a sub-interface of a connection service terminal in the operation interface shown in FIG. 4(a). The data reading terminal sends the connection request to the vehicle-mounted TBOX, and the connection request carries a connection address IP and a connection port number PORT to request to establish the communication connection with the vehicle-mounted TBOX. The service terminal in FIG. 4(a) is the vehicle-mounted TBOX.

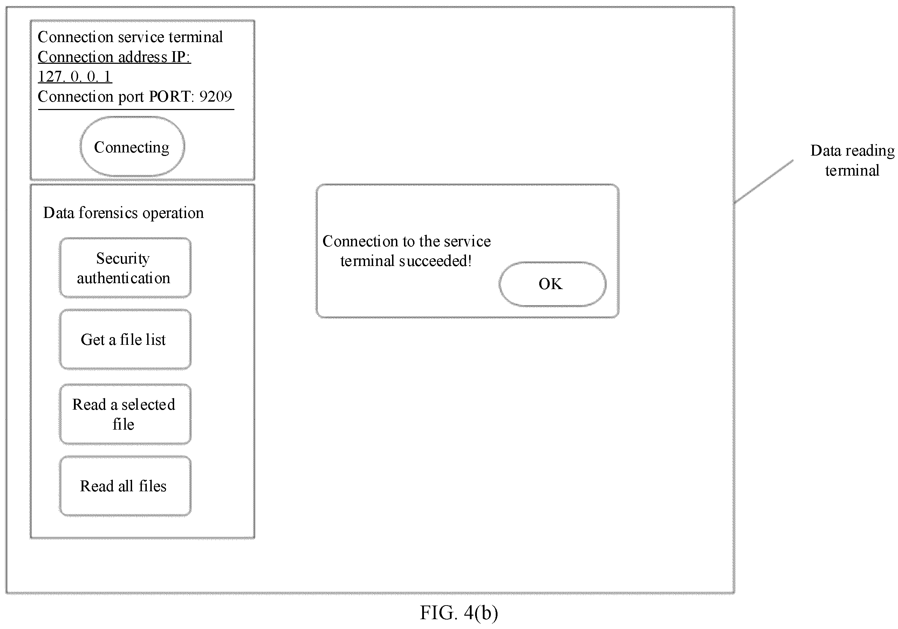

After clicking the "Connect" button, the operation interface of the data reading terminal changes to an operation interface shown in FIG. 4(b), which is a second diagram of the operation interface of the data reading terminal. As shown in FIG. 4(b), the "Connect" button in FIG. 4(a) is displayed as "Connecting", which means that the data reading terminal is establishing the communication connection with the vehicle-mounted TBOX.

Correspondingly, the vehicle-mounted TBOX receives the connection request from the data reading terminal, where the connection request is used to request the vehicle-mounted TBOX to establish the communication connection with the data reading terminal.

Specifically, the vehicle-mounted TBOX may determine that the connection request from the data reading terminal is received by monitoring port data in real time.

Based on the above descriptions, it can be learned that step 102 can be executed when the logged-in account has the data reading permission.

Specifically, if the account logged in to the data reading terminal is the first account, and the data reading terminal determines that the first account has the data reading permission, then step 102 may include: The data reading terminal sends, based on a fact that the first account has the data reading permission, the connection request to the vehicle-mounted TBOX in response to the instruction to establish the connection.

Step 103: The vehicle-mounted TBOX sends a connection response to the connection request to the data reading terminal, to establish the communication connection with the data reading terminal.

It should be noted that the communication connection may be a variety of different connections, which are specifically related to the types of the link. For example, when the link is established based on the USB data line, the communication connection is a USB communication connection. When the link is established based on the wireless local area network, the communication connection is a transmission control protocol (Transmission Control Protocol, TCP) connection.

It is understood that when the communication connection is the transmission control protocol TCP connection, after receiving the connection response, the data reading terminal may further send a confirmation message to the vehicle-mounted TBOX to complete a TCP three-way handshake, thereby establishing the communication connection.

Correspondingly, the data reading terminal receives the connection response to the connection request from the vehicle-mounted TBOX, to establish the communication connection with the data reading terminal.

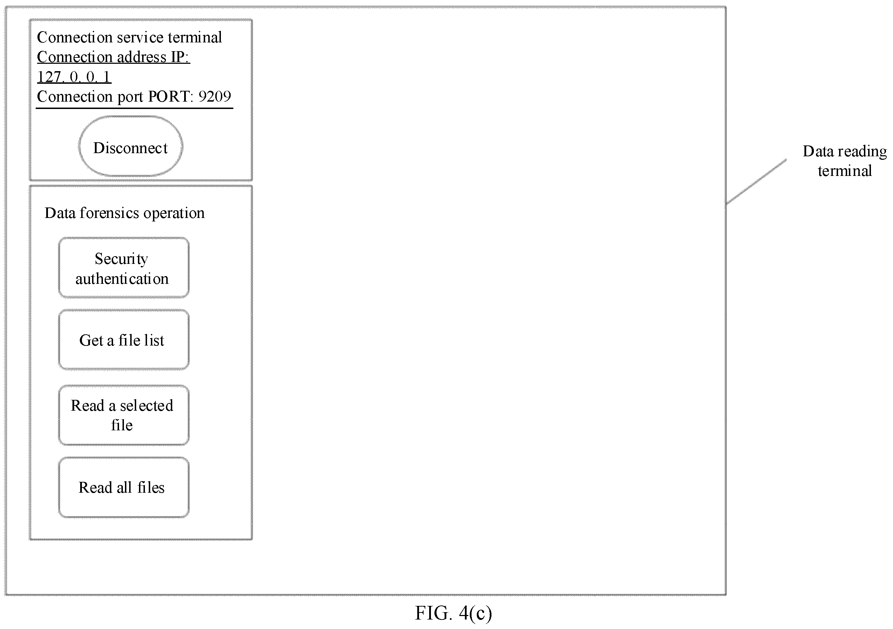

As shown in FIG. 4(b), the connection response may be a prompt of "Connection to the service terminal succeeded" in FIG. 4(b). Thereafter, the operation interface of the data reading terminal changes to an operation interface shown in FIG. 4(c), which is a third diagram of the operation interface of the data reading terminal. In the interface, a "Disconnect" button is displayed at a position of "Connecting" in FIG. 4(b), indicating that the communication connection has been established between the data reading terminal and the vehicle-mounted TBOX, and the user may disconnect the communication connection between the data reading terminal and the vehicle-mounted TBOX by clicking the "Disconnect" button.

Step 104: The data reading terminal sends a security authentication request to the vehicle-mounted TBOX, where the security authentication request instructs the vehicle-mounted TBOX to obtain a security authentication result.

Specifically, the user may click a virtual button "Security authentication" in the operation interface shown in FIG. 4(c). In this case, the data reading terminal executes step 104 to initiate a security authentication process. The right half of the operation interface shown in FIG. 4(c) may display indication information related to the security authentication process.

Correspondingly, the vehicle-mounted TBOX receives the security authentication request from the data reading terminal, where the security authentication request instructs the vehicle-mounted TBOX to obtain the security authentication result.

To ensure security of data in the vehicle-mounted TBOX and prevent the data in the vehicle-mounted TBOX from being stolen by malicious devices, before data reading, the vehicle-mounted TBOX may perform security authentication on the data reading terminal to obtain the security authentication result, namely step 105.

It is understood that a data reading process is usually initiated by the data reading terminal. Therefore, before data reading, the vehicle-mounted TBOX may be instructed through step 104 to obtain the security authentication result, so that the vehicle-mounted TBOX performs security authentication on the data reading terminal when the data reading terminal needs to read data. This prevents the vehicle-mounted TBOX from performing a redundant security authentication operation when the data reading terminal does not need to read data.

Based on the above descriptions, it will be understood that the vehicle-mounted TBOX may be instructed through step 104 to perform security authentication. In addition, the vehicle-mounted TBOX may further actively initiate security authentication after the communication connection is established. Therefore, step 104 is optional.

Step 105: The vehicle-mounted TBOX obtains the security authentication result, where the security authentication result indicates that the vehicle-mounted TBOX has performed successful security authentication on the data reading terminal.

Specifically, step 105 may include: The vehicle-mounted TBOX performs security authentication on the data reading terminal to obtain the security authentication result.

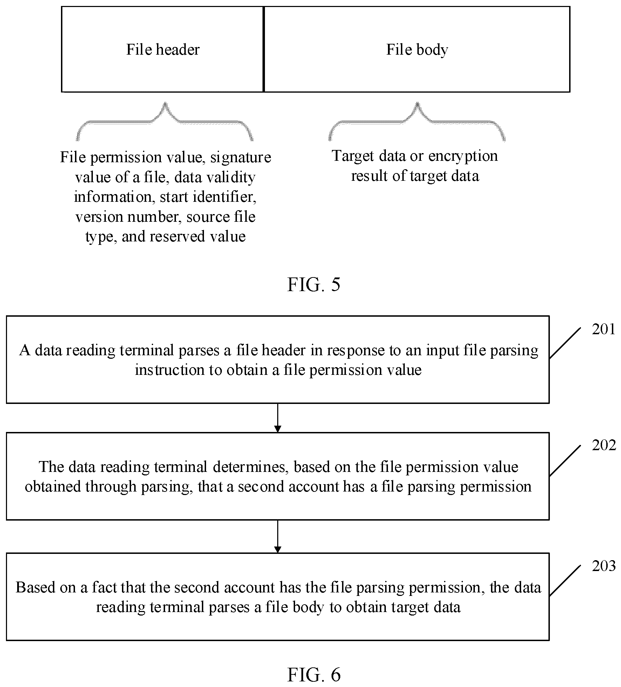

It should be noted that there are many security authentication methods. This is not specifically limited in embodiments of the present disclosure. The following describes one of the security authentication methods with reference to FIG. 5.

Based on the above descriptions, it can be learned that step 104 is optional. Therefore, when step 104 is executed, step 105 may include:

The vehicle-mounted TBOX obtains the security authentication result in response to the security authentication request.

Step 106: The vehicle-mounted TBOX sends the security authentication result to the data reading terminal.

Correspondingly, the data reading terminal receives the security authentication result from the vehicle-mounted TBOX, where the security authentication result indicates that the vehicle-mounted TBOX has performed successful security authentication on the data reading terminal.

Upon successful security authentication, the data reading terminal may perform data reading.

In step 105 and step 106, security authentication is performed by the vehicle-mounted TBOX on the data reading terminal, thereby ensuring security of data in the vehicle-mounted TBOX and preventing the data in the vehicle-mounted TBOX from being stolen by malicious devices.

It should be noted that, in a scenario with a lower security requirement, security authentication may not be performed on the data reading terminal. Therefore, step 105 and step 106 are optional.

Step 107: The data reading terminal sends a data reading instruction to the vehicle-mounted TBOX after the communication connection is established, where the data reading instruction instructs the vehicle-mounted TBOX to send data.

Correspondingly, the vehicle-mounted TBOX receives the data reading instruction from the data reading terminal after the communication connection is established, where the data reading instruction instructs the vehicle-mounted TBOX to send the data.

Based on the above descriptions, it will be understood that the vehicle-mounted TBOX may perform security authentication on the data reading terminal. Therefore, after step 105 and step 106 are executed, step 107 may include: The data reading terminal sends the data reading instruction to the vehicle-mounted TBOX based on the security authentication result, where the security authentication result indicates that the vehicle-mounted TBOX has performed successful security authentication on the data reading terminal.

Step 108: The vehicle-mounted TBOX sends target data to the data reading terminal in response to the data reading instruction.

Correspondingly, the data reading terminal receives the target data from the vehicle-mounted TBOX.

Specific content of the target data is not limited in embodiments of the present disclosure. The target data may include data in a file list or data in a file. The target data sent by the vehicle-mounted TBOX may be specifically determined based on an identify in the data reading instruction.

In an implementation, the data reading instruction carries an instruction identity, and the instruction identity instructs the vehicle-mounted TBOX to send data in a file list stored in the vehicle-mounted TBOX. Correspondingly, the target data includes the data in the file list.

The data in the file list may include information such as a name of a file, time at which the file was generated, time at which the file was last updated, a size of the file, and a quantity of packets in the file.

Specifically, the user may click a virtual button "Get a file list" in the operation interface shown in FIG. 4(c). Correspondingly, the data reading instruction carries an instruction identity instructing to send the data in the file list for reading the data in the file list. The right half of the operation interface shown in FIG. 4(c) may display information related to a process of obtaining the file list.

In another implementation, the data reading instruction carries an instruction identity, and the instruction identity instructs the vehicle-mounted TBOX to send data in a file stored in the vehicle-mounted TBOX. Correspondingly, the target data includes the data in the file stored in the vehicle-mounted TBOX.

It should be noted that there are two cases when the target data includes the data in the file stored in the vehicle-mounted TBOX.

The first case is that the target data includes data in all files stored in the vehicle-mounted TBOX.

For example, the user may click a virtual button "Read all files" in the operation interface shown in FIG. 4(c). Correspondingly, the data reading instruction carries an instruction identity instructing to send the data in all the files stored in the vehicle-mounted TBOX. The vehicle-mounted TBOX sends the data in all the files stored in the vehicle-mounted TBOX based on the instruction identity. The right half of the operation interface shown in FIG. 4(c) may display information related to a process of reading all the files.

The second case is that the target data includes data in some files stored in the vehicle-mounted TBOX, and these files may be files selected by the user.

In the second case, in addition to the instruction identity, the data reading instruction further carries a selected data identity, and the selected data identity instructs the vehicle-mounted TBOX to send data in a selected file. Correspondingly, the target data includes the data in the selected file.

The selected data identity may be a name or a code in the selected file.

For example, the user may first select one or more files on the data reading terminal, and then click a virtual button "Read selected files" in the operation interface shown in FIG. 4(c). Correspondingly, the data reading instruction carries the selected data identity. The vehicle-mounted TBOX sends the data in the selected file of the user based on the selected data identity. The right half of the operation interface shown in FIG. 4(c) may display information related to a process of reading the selected file.

It should be noted that the user may first read the data in the file list by using the data reading terminal, and then select the one or more files based on the data in the file list.

In step 108, a format of a file that includes the target data and that is sent by the vehicle-mounted TBOX may be a format specified by a standard. Correspondingly, the format of the file that includes the target data and that is received by the data reading terminal is also the format specified by the standard. After receiving the target data, the data reading terminal may directly store the file that includes the target data and whose format is the format specified by the standard, or parse the target data from the file that includes the target data and whose format is the format specified by the standard, and then encapsulate the target data into data in a custom format through step 109.

Step 109: The data reading terminal encapsulates the target data into a file in a custom format.

The custom format can be understood as another format different from the format specified by the standard. Specifically, the custom format is different from a format of a file used by the vehicle-mounted TBOX to transmit the target data.

For example, after receiving the file that includes the target data and that is sent by the vehicle-mounted TBOX, the data reading terminal parses the target data therefrom and then encapsulates the target data into the file in the custom format. A process of encapsulating the target data into the file in the custom format includes: encrypting the target data first to obtain ciphertext data, and then encapsulating the ciphertext data of the target data into the file in the custom format.

In this way, it is difficult for another device to parse the file in the custom format to obtain the target data in the file without knowing the custom format, thereby ensuring security of the target data in the file in the custom format to a certain extent.

There may be a plurality of custom formats. This is not specifically limited in embodiments of the present disclosure. The following describes one format of the file in the custom format.

For example, as shown in FIG. 5, the file in the custom format includes two parts: a file header and a file body. The file header may include parameters for verification, and the file body may include the target data or an encryption result of the target data.

When the file body includes the encryption result of the target data, the target data can only be obtained by parsing the file body to obtain the encryption result and decrypting the encryption result. The target data cannot be obtained by only parsing the file body. Therefore, security of the target data is ensured in this embodiment.

There are a plurality of types of parameters for verification in the file header. For example, as shown in FIG. 5, the parameters for verification in the file header may include parameters such as a file permission value, a signature value of a file, data validity information, a start identifier, a version number, a source file type, and a reserved value.

The file permission value can be used to verify whether the account logged in to the data reading terminal has a file parsing permission. The signature value of the file can be used to verify whether the data in the file in the custom format has been tampered with. The data validity information can be used to verify whether the target data in the file in the custom format is invalid.

Step 110: The data reading terminal parses the file in the custom format in response to an input data parsing instruction to obtain the target data.

The user may input the data parsing instruction immediately after step 109 to trigger execution of step 110. The user may alternatively input the data parsing instruction after a period of time after step 109 to trigger the execution of step 110.

For example, on the morning of September 21, the user uses the data reading terminal to read the target data from the TBOX and encapsulates the target data into the file in the custom format. After the user returns to the company, on the afternoon of September 21, the user enters the data parsing instruction to parse the file in the custom format.

Specifically, the user may click a function menu bar on the data reading terminal and select local data parsing in the function menu bar, and then input the data parsing instruction in a local data parsing interface. Correspondingly, the data reading terminal receives the data parsing instruction.

It should be noted that the data parsing instruction may include a plurality of instructions, and there are also a plurality of methods for inputting the data parsing instruction.

For example, the user may input the data parsing instruction by clicking a button in the data reading terminal, or may input the data parsing instruction by voice.

In an implementation, the data reading terminal includes an internal memory and an external memory, and the file in the custom format is stored in the external memory.

The data parsing instruction includes a file import instruction, and the file import instruction instructs the data reading terminal to import the file in the custom format in the external memory into the internal memory, so that the data reading terminal parses the file in the custom format in the internal memory.

Correspondingly, after step 109 and before step 110, the method may further include: The data reading terminal imports the file in the custom format in the external memory into the internal memory in response to the file import instruction, so that the data reading terminal parses the file in the custom format in the internal memory.

Because the file import instruction is used to import the file in the custom format in the external memory into the internal memory, the file in the custom format in the internal memory can be parsed directly in response to the file import instruction without the need for additional instructions to instruct the data reading terminal to parse the file in the custom format in the internal memory. This reduces a quantity of instructions and makes a parsing process faster.

It should be noted that different accounts may be logged in to the data reading terminal, and permissions of different accounts may be different. For example, when the file in the custom format is obtained by encapsulating the target data read by the first account, any account other than the first account may or may not have the file parsing permission.

Therefore, before the target data is obtained through parsing, the account logged in to the data reading terminal needs to be determined to have the file parsing permission.

In an implementation, an account logged in to the data reading terminal is a second account, where the second account may be the same as or different from the first account.

Correspondingly, step 110 includes: When the second account has the file parsing permission, the data reading terminal parses the file in the custom format in response to the input data parsing instruction to obtain the target data.

It should be noted that there are a plurality of methods for determining that the second account has the file parsing permission. This is not specifically limited in embodiments of the present disclosure. For example, the second account may be determined to have the file parsing permission through parameters in the file in the custom format, which will be described in detail below.

In this embodiment of the present disclosure, the data reading terminal parses a file in a custom format stored locally, and the data reading terminal is not a terminal of an automobile manufacturer, so that target data in the file in the custom format stored locally by the data reading terminal cannot be easily modified or deleted by the automobile manufacturer. However, in an existing method, the target data is stored in a server of the automobile manufacturer, so the automobile manufacturer can freely modify or delete data in a file on the server. Therefore, in this embodiment of the present disclosure, authenticity of parsed data obtained by locally parsing the target data can be ensured.

Based on the above descriptions, it will be understood that the file header can include different parameters. The following specifically describes a parsing process of the file in the custom format with respect to different parameters included in the file header.

In an implementation, an account logged in to the data reading terminal is a second account. The file in the custom format includes a file header and a file body. The file header includes a file permission value, and the file permission value is used to determine an account having a file parsing permission. The file body includes the target data. It should be noted that, in this embodiment, the file body including the target data may be understood as the file body including the target data, or including the encryption result of the target data.

Correspondingly, as shown in FIG. 6, step 110 includes:
Step 201: The data reading terminal parses the file header in response to the input data parsing instruction to obtain the file permission value.
Step 202: The data reading terminal determines that the second account has the file parsing permission based on the file permission value obtained through parsing.
Step 203: Based on a fact that the second account has the file parsing permission, the data reading terminal parses the file body to obtain the target data.

Based on the above descriptions, it can be learned that the file body may include the target data or the encryption result of the target data. When the file body includes the target data, the target data may be obtained by parsing the file body. When the file body includes the encryption result of the target data, the encryption result of the target data may be obtained by parsing the file body, and then the encryption result of the target data is decrypted to obtain the target data.

In other embodiments below, a process of parsing the file body is similar to the above process in this embodiment. Details are not described herein.

It should be noted that content of the file permission value may vary, and an implementation method of step 202 is different regarding different content.

For example, there is a mapping relationship between the file permission value and the account, and the file permission value represents one or a group of accounts having file parsing permissions. Correspondingly, step 202 may include: determining all accounts corresponding to the file permission value based on the mapping relationship, and searching from all the corresponding accounts whether there is a second account; and if there is the second account, determining that the second account has the file parsing permission.

In another implementation, the file permission value includes identity values of N accounts, and indicates that the N accounts have file parsing permissions, where N is a positive integer. Correspondingly, step 202 includes: The data reading terminal determines an identity value of the second account. The data reading terminal determines, based on the identity values of the N accounts including the identity value of the second account, that the second account has the file parsing permission. A method for determining the identity value of the second account is the same as a method for determining the identity values of the N accounts.

The identity values of the N accounts are added to the file permission value, so that the file permission value can indicate that the N accounts have the file parsing permissions. In this way, it can be determined that the second account has the file parsing permission by identifying the identity value of the second account included in the file permission value.

It is understood that N may be 1, and correspondingly, the file permission value includes an identity value of 1 account. Alternatively, N may be 2 or an integer greater than 2, and correspondingly, the file permission value includes identity values of a plurality of accounts.

For example, the file permission value includes permission values of 10 accounts. As long as a permission value of the second account is included in the file permission value, it can be determined that the second account has the file parsing permission.

When N is 1, the N accounts can be the first account that reads the target data from the TBOX. In this case, this embodiment is applicable to a scenario where only the first account that reads the target data has the file parsing permission, that is, the file permission value only includes a permission value of the first account. In this way, the second account has the file parsing permission only when the second account is the same as the first account.

In an implementation, the identity value of each of the N accounts is obtained based on the account and a password of the account. That the data reading terminal determines the identity value of the second account includes: The data reading terminal determines the identity value of the second account based on the second account and a password of the second account.

An identity value of an account is obtained based on the account and a password of the account, rather than the account itself or another simple numerical value. This increases the difficulty of cracking the identity value and the difficulty of changing the identity value to cause an account originally having no file parsing permission to have the file parsing permission, thereby ensuring security of the target data.

It should be understood that the target data originates from the TBOX and may involve privacy of a car owner. Therefore, in this embodiment of the present disclosure, valid duration is set for the target data to prevent the target data from being stored by others for a long time or even permanently.

In an implementation, the file in the custom format includes a file header and a file body. The file header includes data validity information, and the data validity information indicates validity time of the target data. The file body includes the target data.

For example, the data validity information may include data validity start time and data validity duration. Alternatively, the data validity information may include data validity start time and data validity end time (which may also be understood as data invalidation time).

Correspondingly, step 110 includes:
The data reading terminal parses the file header in response to the input data parsing instruction to obtain the data validity information.

When the data validity information indicates that the target data is valid at a current moment, the data reading terminal parses the file body to obtain the target data.

In this embodiment, the data validity information indicates the validity time of the target data, so that the target data can be parsed only when it is valid at the current moment, and cannot be parsed when it is invalid at the current moment. This prevents the target data from being parsed by others for a long time or even permanently to protect privacy of the owner.

Based on the above descriptions, it can be learned that the file permission value in the file header is used to determine an account having a file parsing permission, so there is a case in which the file permission value is maliciously tampered with to cause an account originally having no file parsing permission to have the file parsing permission.

Therefore, this embodiment of the present disclosure sets a signature value in the file header to prevent the above case through the signature value.

Specifically, in an implementation, the file header further includes a signature value of the file in the custom format. During an encapsulation process of the file in the custom format, the signature value of the file is obtained based on the file permission value.

Correspondingly, step 201 includes: The data reading terminal parses the file header in response to the input data parsing instruction to obtain the file permission value and the signature value of the file in the custom format.

In addition, the method further includes: The data reading terminal calculates a reference value of the signature value of the file in the custom format based on the file permission value obtained through parsing.

The reference value of the signature value of the file may be calculated based on all fields of the file permission value, or may be calculated based on some fields of the file permission value.

Correspondingly, step 203 includes: Based on facts that the second account has the file parsing permission and the reference value of the signature value of the file in the custom format is consistent with the signature value of the file in the custom format, the data reading terminal parses the file body to obtain the target data.

Based on facts that the second account has the file parsing permission, but the reference value of the signature value of the file in the custom format is inconsistent with the signature value of the file in the custom format, the data reading terminal does not parse the file body.

For ease of understanding, the above process is described below by using a specific example.

For example, during the encapsulation process of the file in the custom format, the file permission value is 100101, and the signature value of the file in the custom format is obtained based on 100101.

However, after encapsulation, the file permission values in the file in the custom format may be tampered with. For example, if the file permission value in the file header is changed from 100101 to 100110, the file permission value obtained through parsing is 100110. In this case, the reference value that is of the signature value of the file in the custom format and that is calculated based on the file permission value 100110 obtained through parsing is inconsistent with the signature value in the file header, so that the data reading terminal does not parse the file body.

If the file permission value in the file header is not tampered with, that is, still being 100101, the file permission value obtained through parsing is still 100101. In this case, the reference value of the signature value of the file in the custom format calculated based on the file permission value 100101 obtained through parsing is consistent with the signature value in the file header, so that the data parses the file body to obtain the target data.

It will be understood that, in this embodiment of the present disclosure, the file header further includes the signature value of the file in the custom format. During the encapsulation process of the file in the custom format, the signature value of the file in the custom format is obtained based on the file permission value. Based on this, the reference value of the signature value of the file in the custom format is calculated based on the file permission value obtained through parsing. When the reference value of the signature value of the file in the custom format is consistent with the signature value of the file in the custom format, the file body is parsed to obtain the target data. However, when the reference value of the signature value of the file in the custom format is inconsistent with the signature value of the file in the custom format, the file body is not parsed. This effectively avoids maliciously tampering with the file permission value to cause an account originally having no file parsing permission to have the file parsing permission, thereby ensuring security of the target data.

Similarly, the data validity information in the file header may be maliciously tampered with.

Therefore, in an implementation, the account logged in to the data reading terminal is the second account.

The file header further includes the signature value of the file in the custom format. During the encapsulation process of the file in the custom format, the signature value of the file in the custom format is obtained based on the data validity information.

Correspondingly, that the data reading terminal parses the file header in response to the input data parsing instruction to obtain the data validity information includes: The data reading terminal parses the file header in response to the input data parsing instruction to obtain the data validity information and the signature value of the file in the custom format.

In addition, the method further includes: The data reading terminal calculates the reference value of the signature value of the file in the custom format based on the data validity information obtained through parsing.

The reference value of the signature value of the file may be calculated based on all fields of the data validity information, or may be calculated based on some fields of the data validity information.

Correspondingly, that the data reading terminal parses the file body to obtain the target data when the data validity information indicates that the target data is valid at the current moment includes: Based on facts that the data validity information indicates that the target data is valid at the current moment and the reference value of the signature value of the file in the custom format is consistent with the signature value of the file in the custom format, the data reading terminal parses the file body to obtain the target data.

Based on facts that the data validity information indicates that the target data is valid at the current moment, but the reference value of the signature value of the file in the custom format is inconsistent with the signature value of the file in the custom format, the data reading terminal does not parse the file body.

Based on the above descriptions, it will be understood that the account logged in to the data reading terminal is the second account. The file header may include either the file permission value or the data validity information. Therefore, in an implementation, the file in the custom format includes a file header and a file body. The file header includes a file permission value, data validity information, and a signature value of the file in the custom format. The data validity information indicates validity time of the target data, and the file permission value is used to determine an account having a file parsing permission. The file body includes the target data.

During the encapsulation process of the file in the custom format, the signature value of the file in the custom format is obtained based on the file permission value and the data validity information.

Correspondingly, that the data reading terminal parses the file in the custom format in response to the input data parsing instruction to obtain target data includes: The data reading terminal parses the file header in response to the input data parsing instruction to obtain the file permission value, the data validity information, and the signature value of the file in the custom format. The data reading terminal determines, based on the file permission value obtained through parsing, that the second account has the file parsing permission. The data reading terminal calculates a reference value of the signature value of the file in the custom format based on the file permission value and the data validity information obtained through parsing. Based on facts that the second account has the file parsing permission, the data validity information indicates that the target data is valid at the current moment, and the reference value of the signature value of the file in the custom format is consistent with the signature value of the file in the custom format, the data reading terminal parses the file body to obtain the target data.

The above describes, through step 110, the process in which the data reading terminal locally parses the data reading terminal to obtain the target data. It will be understood that in addition to local parsing, the data reading terminal may alternatively parse the file in the custom format through a cloud to obtain the target data. For details, refer to step 111 and step 112.

Step 111: The data reading terminal sends the file in the custom format to a server in response to an input upload instruction, so that the server obtains the target data by parsing the file in the custom format.

Specifically, the user may click a function menu bar on the data reading terminal and select cloud data parsing in the function menu bar to enter a cloud data parsing interface, and then input the upload instruction in the cloud data parsing interface. Correspondingly, the data reading terminal receives the upload instruction. The upload instruction is an instruction for file uploading, and instructs the data reading terminal to upload the file in the custom format to the server. In this embodiment, the server may be understood as the cloud authentication center in FIG. 2.

After receiving the file in the custom format, the server may parse the file in the custom format to obtain the target data. The server may alternatively not parse the file in the custom format first, and parse the file in the custom format after receiving a data request from the terminal. The data request is used to request the server to send the target data obtained through parsing.

For example, the data reading terminal receives a download instruction, where the download instruction instructs the data reading terminal to download the target data from the server. The data reading terminal sends a data request to the server in response to the download instruction, and the data request is used to request the server to send the target data to the data reading terminal. The server parses a target file in response to the data request to obtain the target data.

The user may input the download instruction by clicking a virtual button "Download file" in the cloud data parsing interface.

Step 112: The data reading terminal receives the target data from the server.

It should be noted that the process in which the server parses the file in the custom format is similar to the process in which the data reading terminal parses the file in the custom format. For details, refer to related descriptions of step 110 to understand the process in which the data reading terminal parses the file in the custom format.

The above describes the parsing process of the target data. After the target data is obtained through parsing, the data reading terminal may display and/or perform statistical analysis on the target data. A display method may include at least one of text display, table display, and chart display, and the statistical analysis may include at least one of aggregation statistics, classification statistics, interval statistics, and chart (such as bar chart statistics, line chart statistics, or pie chart) statistics.

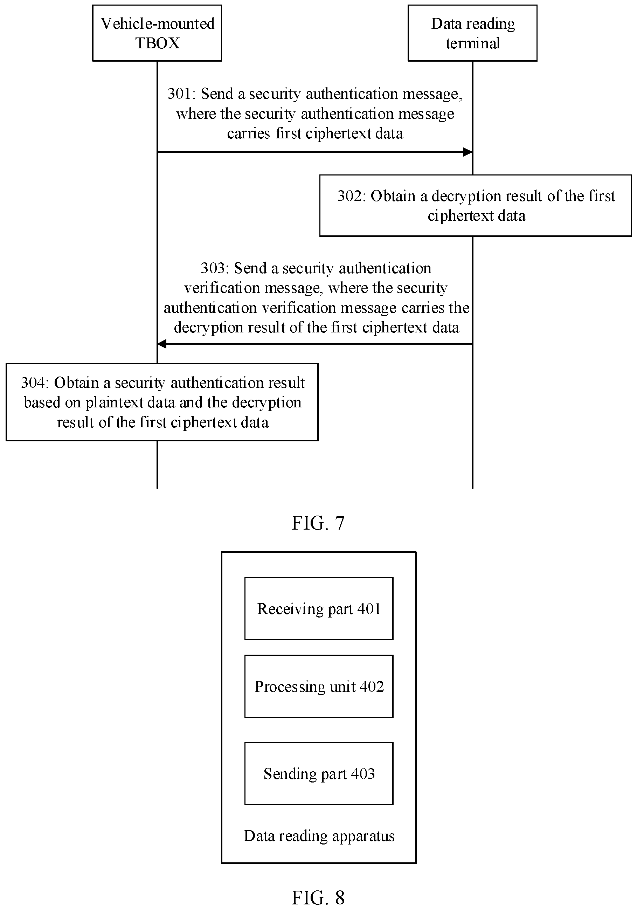

The following describes a process of security authentication with reference to FIG. 7.

As shown in FIG. 7, the process of security authentication includes the following steps.

Step 301: The vehicle-mounted TBOX sends a security authentication message to the data reading terminal, where the security authentication message carries first ciphertext data, and the first ciphertext data is obtained by encrypting plaintext data.

Correspondingly, the data reading terminal receives the security authentication message from the vehicle-mounted TBOX, where the security authentication message carries the first ciphertext data.

Step 302: The data reading terminal obtains a decryption result of the first ciphertext data.

Step 302 includes two implementations.

In the first implementation, the data reading terminal decrypts the first ciphertext data to obtain the decryption result.

In the second implementation, the data reading terminal sends the first ciphertext data to the server for decrypting by the server to obtain the decryption result.

Step 303: The data reading terminal sends a security authentication verification message to the vehicle-mounted TBOX, where the security authentication verification message carries the decryption result of the first ciphertext data, and the decryption result of the first ciphertext data is used to determine the security authentication result.

Correspondingly, the vehicle-mounted TBOX receives the security authentication verification message from the data reading terminal, where the security authentication verification message carries the decryption result of the first ciphertext data.

Step 304: The vehicle-mounted TBOX obtains the security authentication result based on the plaintext data and the decryption result of the first ciphertext data.

Specifically, when the plaintext data is consistent with the decryption result of the first ciphertext data, the vehicle-mounted TBOX determines that the security authentication is successful. Correspondingly, the security authentication result indicates that the vehicle-mounted TBOX has performed successful security authentication on the data reading terminal.

It should be understood that encryption of the plaintext data and decryption of the first ciphertext data may be implemented through an asymmetric key, and the asymmetric key includes a group of paired private keys and public keys.

Based on this, in an implementation, the first ciphertext data is obtained by encrypting the plaintext data based on a private key. Specifically, the vehicle-mounted TBOX encrypts the plaintext data based on the private key to obtain the first ciphertext data.

Correspondingly, the security authentication message further carries an identifier, where the identifier indicates a public key paired with the private key, and the public key is used to decrypt the first ciphertext data to obtain the decryption result of the first ciphertext data.

Because the security authentication message carries the identifier, if the first ciphertext data is decrypted by the data reading terminal, the data reading terminal may query, based on the identifier, the public key paired with the private key, and then decrypt the first ciphertext data by using the public key to obtain the decryption result.

If the first ciphertext data is decrypted by the server, step 302 may include: The data reading terminal sends the first ciphertext data and the identifier to the server, and the data reading terminal receives the decryption result of the first ciphertext data from the server.

Specifically, the server queries, based on the identifier, the public key paired with the private key, decrypts the first ciphertext data by using the public key to obtain the decryption result, and then sends the decryption result to the data reading terminal.

As shown in FIG. 8, the present disclosure further provides a data reading apparatus, and the apparatus may be used in a vehicle-mounted TBOX or a terminal device.

Specifically, when the data reading apparatus is used in the vehicle-mounted TBOX, a link is established between the vehicle-mounted TBOX and a data reading terminal. The apparatus includes: a receiving part 401, configured to receive a connection request from the data reading terminal, where the connection request is used to request the vehicle-mounted TBOX to establish a communication connection with the data reading terminal; and a sending part 403, configured to send a connection response to the connection request to the data reading terminal, to establish the communication connection with the data reading terminal. The receiving part 401 is configured to receive a data reading instruction from the data reading terminal after the communication connection is established, where the data reading instruction instructs the vehicle-mounted TBOX to send data. The sending part 403 is configured to send target data to the data reading terminal in response to the data reading instruction.

In an implementation, the link is established based on a universal serial bus USB data line or based on a wireless local area network.

In an implementation, the data reading instruction carries an instruction identity; the instruction identity instructs the vehicle-mounted TBOX to send data in a file list stored in the vehicle-mounted TBOX; and the target data includes the data in the file list.

In an implementation, the data reading instruction carries an instruction identity; the instruction identity instructs the vehicle-mounted TBOX to send data in a file stored in the vehicle-mounted TBOX; and the target data includes the data in the file stored in the vehicle-mounted TBOX.

In an implementation, the data reading instruction further carries a selected data identity, and the selected data identity instructs the vehicle-mounted TBOX to send data in a selected file; and the target data includes the data in the selected file.

In an implementation, the apparatus further includes: a processing unit 402, configured to obtain a security authentication result, where the security authentication result indicates that the vehicle-mounted TBOX has performed successful security authentication on the data reading terminal; and a sending part 403, further configured to send the security authentication result to the data reading terminal.

In an implementation, the sending part 403 is further configured to send a security authentication message to the data reading terminal, where the security authentication message carries first ciphertext data, and the first ciphertext data is obtained by encrypting plaintext data. The receiving part 401 is further configured to receive a security authentication verification message from the data reading terminal, where the security authentication verification message carries a decryption result of the first ciphertext data. The processing unit 402 is configured to obtain the security authentication result based on the plaintext data and the decryption result of the first ciphertext data.

In an implementation, the first ciphertext data is obtained by encrypting the plaintext data based on a private key; and the security authentication message further carries an identifier, where the identifier indicates a public key paired with the private key, and the public key is used to decrypt the first ciphertext data to obtain the decryption result of the first ciphertext data.

In an implementation, the receiving part 401 is further configured to receive a security authentication request from the data reading terminal, where the security authentication request instructs the vehicle-mounted TBOX to obtain the security authentication result. The processing unit 402 is configured to obtain the security authentication result by the vehicle-mounted TBOX in response to the security authentication request.

Specifically, when the data reading apparatus is used in the data reading terminal, a link is established between the data reading terminal and a vehicle-mounted TBOX. The apparatus includes: a sending part 403, configured to send a connection request to the vehicle-mounted TBOX in response to an instruction to establish a connection, where the connection request is used to request the vehicle-mounted TBOX to establish a communication connection with the data reading terminal; and a receiving part 401, configured to receive a connection response to the connection request from the vehicle-mounted TBOX, to establish the communication connection with the data reading terminal. The sending part 403 is configured to send a data reading instruction to the vehicle-mounted TBOX after the communication connection is established, where the data reading instruction instructs the vehicle-mounted TBOX to send data. The receiving part 401 is configured to receive target data from the vehicle-mounted TBOX.

In an implementation, the link is established based on a universal serial bus USB data line or based on a wireless local area network.

In an implementation, the data reading instruction carries an instruction identity; the instruction identity instructs the vehicle-mounted TBOX to send data in a file list stored in the vehicle-mounted TBOX; and the target data includes the data in the file list.

In an implementation, the data reading instruction carries an instruction identity; the instruction identity instructs the vehicle-mounted TBOX to send data in a file stored in the vehicle-mounted TBOX; and the target data includes the data in the file stored in the vehicle-mounted TBOX.

In an implementation, the data reading instruction further carries a selected data identity, and the selected data identity instructs the vehicle-mounted TBOX to send data in a selected file; and the target data includes the data in the selected file.

In an implementation, the receiving part 401 is further configured to receive a security authentication result from the vehicle-mounted TBOX, where the security authentication result indicates that the vehicle-mounted TBOX has performed successful security authentication on the data reading terminal. The sending part 403 is further configured to send the data reading instruction by the data reading terminal to the vehicle-mounted TBOX based on the security authentication result.

In an implementation, the receiving part 401 is further configured to receive a security authentication message from the vehicle-mounted TBOX, where the security authentication message carries first ciphertext data. The processing unit 402 is configured to obtain a decryption result of the first ciphertext data. The sending part 403 is further configured to send a security authentication verification message to the vehicle-mounted TBOX, where the security authentication verification message carries the decryption result of the first ciphertext data, and the decryption result of the first ciphertext data is used to determine the security authentication result.

In an implementation, the first ciphertext data is obtained by encrypting the plaintext data based on a private key; and the security authentication message further carries an identifier, where the identifier indicates a public key paired with the private key, and the public key is used to decrypt the first ciphertext data to obtain the decryption result of the first ciphertext data.

In an implementation, the sending part 403 is further configured to send a security authentication request to the vehicle-mounted TBOX, where the security authentication request instructs the vehicle-mounted TBOX to obtain the security authentication result.

In an implementation, an account logged in to the data reading terminal is a first account. The processing unit 402 is further configured to determine that the first account has a data reading permission. The sending part 403 is configured to send, based on a fact that the first account has the data reading permission, the connection request to the vehicle-mounted TBOX in response to the instruction to establish the connection.

In an implementation, the apparatus further includes a processing unit 402, configured to encapsulate the target data into a file in a custom format.

In an implementation, the apparatus further includes a processing unit 402, configured to parse the file in the custom format in response to an input data parsing instruction to obtain the target data.

In an implementation, the data reading terminal includes an internal memory and an external memory, and the file in the custom format is stored in the external memory. The data parsing instruction includes a file import instruction, and the file import instruction is used to import the file in the custom format in the external memory into the internal memory, to parse the file in the custom format in the internal memory.

In an implementation, an account logged in to the data reading terminal is a first account. The file in the custom format includes a file header and a file body. The file header includes a file permission value, and the file permission value is used to determine an account having a file parsing permission. The file body includes the target data. The processing unit 402 is configured to: parse the file header in response to the input data parsing instruction to obtain the file permission value; determine, based on the file permission value obtained through parsing, that the first account has the file parsing permission; and based on a fact that the first account has the file parsing permission, parse the file body to obtain the target data.

In an implementation, the file header further includes a signature value of the file in the custom format. During an encapsulation process of the file in the custom format, the signature value of the file in the custom format is obtained based on the file permission value. The processing unit 402 is configured to: parse the file header in response to the input data parsing instruction to obtain the file permission value and the signature value of the file in the custom format; calculate a reference value of the signature value of the file in the custom format based on the file permission value obtained through parsing; and based on facts that the first account has the file parsing permission and the reference value of the signature value of the file in the custom format is consistent with the signature value of the file in the custom format, parse the file body to obtain the target data.

In an implementation, the file permission value includes identity values of N accounts, and indicates that the N accounts have file parsing permissions, where N is a positive integer. The processing unit 402 is configured to: determine an identity value of the first account; and determine, based on the identity values of the N accounts including the identity value of the first account, that the first account has the file parsing permission.

In an implementation, the identity value of each of the N accounts is obtained based on the account and a password of the account. The processing unit 402 is configured to determine the identity value of the first account based on the first account and a password of the first account.

In an implementation, the file in the custom format includes a file header and a file body. The file header includes data validity information, and the data validity information indicates validity time of the target data. The file body includes the target data. The processing unit 402 is configured to: parse the file header in response to the input data parsing instruction to obtain the data validity information; and when the data validity information indicates that the target data is valid at a current moment, parse the file body to obtain the target data.

In an implementation, the file header further includes a signature value of the file in the custom format. During an encapsulation process of the file in the custom format, the signature value of the file in the custom format is obtained based on the data validity information. The processing unit 402 is configured to: parse the file header in response to the input data parsing instruction to obtain the data validity information and the signature value of the file in the custom format; calculate a reference value of the signature value of the file in the custom format based on the data validity information obtained through parsing; and parse the file body to obtain the target data when the data validity information indicates that the target data is valid at the current moment and the reference value of the signature value of the file in the custom format is consistent with the signature value of the file in the custom format.

In an implementation, the sending part 403 is configured to send the file in the custom format to a server in response to an input upload instruction, so that the server obtains the target data by parsing the file in the custom format. The receiving part 401 is configured to receive the target data from the server.

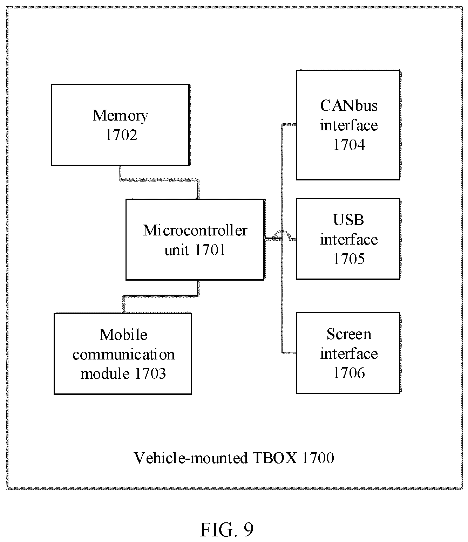

FIG. 9 is a diagram of a structure of a vehicle-mounted TBOX provided in an embodiment of the present disclosure, and is specifically used to implement a function of the data reading apparatus in the embodiment corresponding to FIG. 8. The vehicle-mounted TBOX 1700 may vary greatly due to different configurations or performances, and may include one or more microcontroller units (Microcontroller Units, MCUs) 1701 (for example, one or more processors) and a memory 1702. Specifically, the memory 1702 may perform transitory storage or persistent storage.

The vehicle-mounted TBOX 1700 may further include a mobile communication module 1703, a controller area network bus (Controller Area Network Bus, CANbus) interface 1704, a USB interface 1705 and a screen interface 1706.

The mobile communication module 1703 is configured to send vehicle data to a server, and is further configured to establish a wireless local area network connection with a data reading terminal, so that the data reading terminal can read data.

The CANbus interface 1704 is configured to connect to a CAN bus to implement data transmission with another ECU in a vehicle.

The USB interface 1705 is configured to establish a USB connection with the data reading terminal, so that the data reading terminal can read data.

In this embodiment of the present disclosure, the microcontroller unit 1701 may be configured to perform the data reading method executed by the function of the data reading apparatus in the embodiment corresponding to FIG. 8.

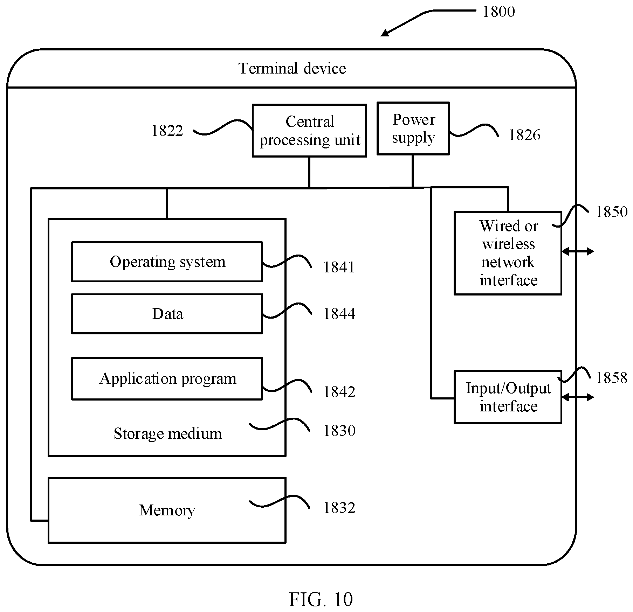

FIG. 10 is a diagram of a structure of a terminal device provided in an embodiment of the present disclosure, and is specifically used to implement a function of the data reading apparatus in the embodiment corresponding to FIG. 8. The terminal device 1800 may vary greatly due to different configurations or performances, and may include one or more central processing units (central processing units, CPUs) 1822 (for example, one or more processors), a memory 1832, and one or more storage media 1830 (for example, one or more mass storage devices) for storing an application program 1842 or data 1844. The memory 1832 and the storage medium 1830 may perform transitory storage or persistent storage. A program stored in the storage medium 1830 may include one or more modules (not shown in the figure), and each module may include a series of instruction operations for a computer device. Further, the central processing unit 1822 may be configured to communicate with the storage medium 1830, and perform, on the terminal device 1800, the series of instruction operations in the storage medium 1830.

The terminal device 1800 may further include one or more power supplies 1826, one or more wired or wireless network interfaces 1850, one or more input/output interfaces 1858, and/or one or more operating systems 1841, such as Windows Server^{™}, Mac OS X^{™}, Unix^{™}, Linux^{™}, and FreeBSD^{™}.

In this embodiment of the present disclosure, the central processing unit 1822 may be configured to perform the data reading method executed by the data reading apparatus in the embodiment corresponding to FIG. 8.

An embodiment of the present disclosure further provides a chip, including one or more processors. Some or all of the processors are configured to read and execute the computer program stored in the memory, to perform the methods in the foregoing embodiments.

Optionally, the chip includes the memory, and the memory and the processor are connected to each other through a circuit or a wire. Further, optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of the present disclosure may be implemented by one chip or by a plurality of chips through collaboration.

An embodiment of the present disclosure further provides a computer storage medium. The computer storage medium is configured to store computer software instructions used by a computer device, and includes a program designed for the computer device.

The computer device may function as the data reading apparatus in the embodiment corresponding to FIG. 8.

An embodiment of the present disclosure further provides a computer program product. The computer program product includes computer software instructions, and the computer software instructions may be loaded by a processor to implement procedures in the methods shown in the foregoing embodiments.

The foregoing descriptions are only specific implementations of the present disclosure, but are not intended to limit the protection scope of the present disclosure. Any variation or replacement readily conceived by a person skilled in the art within the technical scope disclosed in the present disclosure shall fall within the protection scope of the present disclosure.

## Claims

1. A data reading method, applied to a vehicle-mounted TBOX, wherein a link is established between the vehicle-mounted TBOX and a data reading terminal, and based on the link, the method comprises:
receiving, by the vehicle-mounted TBOX, a connection request from the data reading terminal, wherein the connection request is used to request the vehicle-mounted TBOX to establish a communication connection with the data reading terminal;
sending, by the vehicle-mounted TBOX, a connection response to the connection request to the data reading terminal, to establish the communication connection with the data reading terminal;
receiving, by the vehicle-mounted TBOX, a data reading instruction from the data reading terminal after the communication connection is established, wherein the data reading instruction instructs the vehicle-mounted TBOX to send data; and
sending, by the vehicle-mounted TBOX, target data to the data reading terminal in response to the data reading instruction.

2. The method according to claim 1, wherein the link is established based on a universal serial bus USB data line or based on a wireless local area network.

3. The method according to claim 1 or 2, wherein the data reading instruction carries an instruction identity;
the instruction identity instructs the vehicle-mounted TBOX to send data in a file list stored in the vehicle-mounted TBOX; and
the target data comprises the data in the file list.

4. The method according to claim 1 or 2, wherein the data reading instruction carries an instruction identity;
the instruction identity instructs the vehicle-mounted TBOX to send data in a file stored in the vehicle-mounted TBOX; and
the target data comprises the data in the file stored in the vehicle-mounted TBOX.

5. The method according to claim 4, wherein the data reading instruction further carries a selected data identity, and the selected data identity instructs the vehicle-mounted TBOX to send data in a selected file; and
the target data comprises the data in the selected file.

6. The method according to any one of claims 1 to 5, wherein after the communication connection is established and before receiving, by the vehicle-mounted TBOX, the data reading instruction from the data reading terminal, the method further comprises:
obtaining, by the vehicle-mounted TBOX, a security authentication result, wherein the security authentication result indicates that the vehicle-mounted TBOX has performed successful security authentication on the data reading terminal; and
sending, by the vehicle-mounted TBOX, the security authentication result to the data reading terminal.

7. The method according to claim 6, wherein obtaining, by the vehicle-mounted TBOX, the security authentication result comprises:
sending, by the vehicle-mounted TBOX, a security authentication message to the data reading terminal, wherein the security authentication message carries first ciphertext data, and the first ciphertext data is obtained by encrypting plaintext data;
receiving, by the vehicle-mounted TBOX, a security authentication verification message from the data reading terminal, wherein the security authentication verification message carries a decryption result of the first ciphertext data; and
obtaining, by the vehicle-mounted TBOX, the security authentication result based on the plaintext data and the decryption result of the first ciphertext data.

8. The method according to claim 7, wherein the first ciphertext data is obtained by encrypting the plaintext data based on a private key; and
the security authentication message further carries an identifier, wherein the identifier indicates a public key paired with the private key, and the public key is used to decrypt the first ciphertext data to obtain the decryption result of the first ciphertext data.

9. The method according to any one of claims 6 to 8, wherein before obtaining, by the vehicle-mounted TBOX, the security authentication result, the method further comprises:
receiving, by the vehicle-mounted TBOX, a security authentication request from the data reading terminal, wherein the security authentication request instructs the vehicle-mounted TBOX to obtain the security authentication result; and
obtaining, by the vehicle-mounted TBOX, the security authentication result comprises:
obtaining, by the vehicle-mounted TBOX, the security authentication result in response to the security authentication request.

10. A data reading method, applied to a data reading terminal, wherein a link is established between the data reading terminal and a vehicle-mounted TBOX, and based on the link, the method comprises:
sending, by the data reading terminal, a connection request to the vehicle-mounted TBOX in response to an instruction to establish a connection, wherein the connection request is used to request the vehicle-mounted TBOX to establish a communication connection with the data reading terminal;
receiving, by the data reading terminal, a connection response to the connection request from the vehicle-mounted TBOX, to establish the communication connection with the data reading terminal;
sending, by the data reading terminal, a data reading instruction to the vehicle-mounted TBOX after the communication connection is established, wherein the data reading instruction instructs the vehicle-mounted TBOX to send data; and
receiving, by the data reading terminal, target data from the vehicle-mounted TBOX.

11. The method according to claim 10, wherein after the communication connection is established, the method further comprises:
receiving, by the data reading terminal, a security authentication result from the vehicle-mounted TBOX, wherein the security authentication result indicates that the vehicle-mounted TBOX has performed successful security authentication on the data reading terminal; and
sending, by the data reading terminal, the data reading instruction to the vehicle-mounted TBOX comprises:
sending, by the data reading terminal, the data reading instruction to the vehicle-mounted TBOX based on the security authentication result.

12. The method according to claim 11, wherein after the communication connection is established and before receiving, by the data reading terminal, the security authentication result from the vehicle-mounted TBOX, the method further comprises:
receiving, by the data reading terminal, a security authentication message from the vehicle-mounted TBOX, wherein the security authentication message carries first ciphertext data;
obtaining, by the data reading terminal, a decryption result of the first ciphertext data; and
sending, by the data reading terminal, a security authentication verification message to the vehicle-mounted TBOX, wherein the security authentication verification message carries the decryption result of the first ciphertext data, and the decryption result of the first ciphertext data is used to determine the security authentication result.

13. The method according to claim 12, wherein the first ciphertext data is obtained by encrypting plaintext data based on a private key; and
the security authentication message further carries an identifier, wherein the identifier indicates a public key paired with the private key, and the public key is used to decrypt the first ciphertext data to obtain the decryption result of the first ciphertext data.

14. The method according to any one of claims 11 to 13, wherein before receiving, by the data reading terminal, the successful security authentication result from the vehicle-mounted TBOX, the method further comprises:
sending, by the data reading terminal, a security authentication request to the vehicle-mounted TBOX, wherein the security authentication request instructs the vehicle-mounted TBOX to obtain the security authentication result.

15. The method according to any one of claims 10 to 14, wherein an account logged in to the data reading terminal is a first account;
before sending, by the data reading terminal, the connection request to the vehicle-mounted TBOX in response to the instruction to establish the connection, the method further comprises:
determining, by the data reading terminal, that the first account has a data reading permission; and
sending, by the data reading terminal, the connection request to the vehicle-mounted TBOX in response to the instruction to establish the connection comprises:
sending, by the data reading terminal based on a fact that the first account has the data reading permission, the connection request to the vehicle-mounted TBOX in response to the instruction to establish the connection.

16. The method according to any one of claims 10 to 15, wherein after receiving, by the data reading terminal, the target data from the vehicle-mounted TBOX, the method further comprises:
encapsulating, by the data reading terminal, the target data into a file in a custom format.

17. The method according to claim 16, wherein the method further comprises:
parsing, by the data reading terminal, the file in the custom format in response to an input data parsing instruction to obtain the target data.

18. A data reading apparatus, applied to a vehicle-mounted TBOX, wherein a link is established between the vehicle-mounted TBOX and a data reading terminal, and the apparatus comprises:
a receiving part, configured to receive a connection request from the data reading terminal, wherein the connection request is used to request the vehicle-mounted TBOX to establish a communication connection with the data reading terminal; and
a sending part, configured to send a connection response to the connection request to the data reading terminal, to establish the communication connection with the data reading terminal, wherein
the receiving part is configured to receive a data reading instruction from the data reading terminal after the communication connection is established, wherein the data reading instruction instructs the vehicle-mounted TBOX to send data; and
the sending part is configured to send target data to the data reading terminal in response to the data reading instruction.

19. A data reading apparatus, applied to a data reading terminal, wherein a link is established between the data reading terminal and a vehicle-mounted TBOX, and the apparatus comprises:
a sending part, configured to send a connection request to the vehicle-mounted TBOX in response to an instruction to establish a connection, wherein the connection request is used to request the vehicle-mounted TBOX to establish a communication connection with the data reading terminal; and
a receiving part, configured to receive a connection response to the connection request from the vehicle-mounted TBOX, to establish the communication connection with the data reading terminal, wherein
the sending part is configured to send a data reading instruction to the vehicle-mounted TBOX after the communication connection is established, wherein the data reading instruction instructs the vehicle-mounted TBOX to send data; and
the receiving part is configured to receive target data from the vehicle-mounted TBOX.

20. A vehicle-mounted TBOX, wherein the vehicle-mounted TBOX comprises a memory and a processor; and
the processor is configured to execute a computer program or instructions stored in the memory, to cause the vehicle-mounted TBOX to perform the method according to any one of claims 1 to 9.
